# EUROPEAN PATENT APPLICATION

(11) **EP 4 678 287 A1**
(43) Date of publication of application: **14.01.2026**
(21) Application number: 24188432.9
(22) Date of filing: 12.07.2024
(51) Int. Cl.: B01J 35/39, B01D 53/88, H01M 4/90, B01J 19/12

(54) **CATALYST WITH PHOTOCATALYTIC SITES AND A DEVICE WITH THE CATALYST**

(71) Applicant: TOYOTA JIDOSHA KABUSHIKI KAISHA, Aichi-ken, 471-8571 (JP)
(72) Inventor: KINGE, Sachin, 1140 BRUSSELS (BE); ALARCON LLADO, Esther, 1098 XG AMSTERDAM (NL); GARNETT, Erik, 1098 XG AMSTERDAM (NL); RIVERA, Jaime, 1098 XG AMSTERDAM (NL); RAJ, Rohit, 1098 XG AMSTERDAM (NL)
(74) Representative: Cabinet Beau de Loménie

(57) **Abstract**

A catalyst, comprising photocatalytic sites responsive to light at at least one excitation wavelength, and a waveguide for the light at the at least one excitation wavelength, wherein the photocatalytic sites are arranged for an optical coupling and for receiving the light from the waveguide (1).

## Description

### BACKGROUND OF THE INVENTION

### 1. Field of the invention

The present disclosure relates to a catalyst with photocatalytic sites and a device with the catalyst.

### 2. Description of Related Art

Catalysts of a semiconductor or metallic material are known. In photocatalysis, a catalyst is activated by light to accelerate the chemical reaction by providing an additional source of energy or control. A review over transition metal based concepts of photocatalysis which may also be understood as photoelectrocatalysis is shown in D. Lunic et al., Angew. Chem. Int. Ed. 2021, 60, pp 20594-20605, "Using Light to Modify the Selectivity of Transition Metal Catalysed Transformations". Light controlled catalytic sites of Au on nanofibers with titanium oxide are reported in Y. Xiao et al., Applied Catalysis B, 265, 15 May 2020, 118596.

In the automotive world catalyzed reactions are crucial, particularly for reducing air pollution and greenhouse gas emissions. In combustion vehicles, catalysts are used in the catalytic converter to enhance chemical reactions that convert harmful exhaust gases like carbon monoxide (CO) and unburned hydrocarbons (HC) into less harmful substances. Another important reaction in the catalytic converter is the reduction of nitrogen oxides (NOx) to nitrogen (N2) and oxygen (O2). This reaction helps reduce nitrogen oxide emissions, which contribute to smog and acid rain. In hydrogen fuel cell vehicles, hydrogen gas (H2) is combined with oxygen (O2), e.g. from the air to generate the electricity that will run the engine. At the anode, an electrocatalyst (typically platinum) facilitates the dissociation of hydrogen molecules into protons (H+) and electrons (e-). The protons move through the proton-exchange membrane towards the cathode, where another electrocatalyst promotes the combination into water of oxygen molecules (O2) with the protons and electrons that have traveled through an external circuit including a load or engine energized by the fuel cell. This reaction is not only emission-free but also highly efficient, making it a promising alternative to traditional combustion engines. Control of a hydrogen oxidation reaction (HOR) and/or oxygen reduction reaction (ORR) in a fuel cell is desirable in particular in terms of efficiency and/or selectivity. In conventional catalytic converters and fuel cells, a possible depth of light irradiation is practically limited to the top 1% of the total volume of the catalyst loading. This is because of the highly dispersive nature of catalyst material.

### SUMMARY

It is an object of the invention to profit from light for accelerating and/or controlling chemical and/or electrochemical processes or to make use of a potential of light in the form of photons for a precise and/or non-invasive control over one or more processes. It is an object of the invention to allow improvements of catalytic devices in particular in terms of efficiency and/or selectivity. Particular catalytic devices in this context are a catalytic device for treating exhaust gas of an internal combustion engine, in particular with an oxidation and/or a reduction catalyst, a fuel cell with a catalyst for the HOR and/or a catalyst for the ORR, and a catalytic device for carbon dioxide conversion.

In this respect, the present disclosure relates to a catalyst, comprising photocatalytic sites responsive to light at at least one excitation wavelength, and a waveguide for the light at the at least one excitation wavelength, wherein the photocatalytic sites are arranged for an optical coupling and for receiving the light from the waveguide. Light may be input into the waveguide at an end face or face side of the waveguide or via a particle on a main face of the wave guide, preferably and optical resonator, and which is arranged for optical coupling with the waveguide.

Preferably the photocatalytic sites comprise a semiconductor material for absorbing the light at the at least one excitation wavelength and examples of a suitable semiconductor material for this purpose comprise TiO₂, BiVO₄, WO₃, and Si.

The photocatalytic sites may be particles with an average particle diameter between 50 nm and 200 nm, preferably between 80 nm and 150 nm, the average particle diameter being a D50 diameter determined from a random selection of 30 particles in a microscopic image of the particles on the waveguide. A size distribution (D90-D10)/D50 observed on these 30 particles is preferably between 0.8 and 0.9. The average particle diameter may be one adapted and/or optimized for the wavelength of light transmitted by the waveguide for modulating an activity and/or selectivity of the catalytic sites.

The catalyst may further comprise a set of catalytic and co-catalytic sites which includes the photocatalytic sites and the co-catalytic sites may be metal particles with an average particle diameter between 10 and 30 nm, particularly preferably less than 20 nm, and may function to enhance efficiency and/or selectivity of the catalyst.

The waveguide typically comprises or consists of one or more transparent dielectric, in particular inorganic dielectric materials and preferably of a high refractive index, e.g. above 1.5 or above 1.8. Examples of such materials are SiNx, SiOx like SiO₂, Al₂O₃. The waveguide may also be one which comprises a coating. Thus, the waveguide may be composed of a substrate and a coating and the coating may be applied to a substrate of the waveguide, e.g. as a thin layer or multilayer of one or more dielectric, in particular inorganic materials like e.g. SiNx, SiOx like SiO₂, Al₂O₃, for improving stability and/or an optical coupling in directing the light to the photocatalytic sites. A thickness of the coating may be between 5 nm and 100 nm, preferably less than 20 nm.

The waveguide is preferably in the form of a membrane, a film, a strand, a branched structure or a block or combine aspects of two or more of these forms. Exemplary structures of the waveguide may be understood as one dimensional fibers (1D fibers), dimensional slabs (1D slabs), or two-dimensional films (2D films). The structure of the waveguide is preferably used to arrange the catalytic sites, including the photocatalytic sites, and co-catalytic sites on at least one of its main surfaces and to irradiate the light to another one of its surfaces, preferably to one of its face sides. The block can also be a sheet. The block advantageously allows efficiently providing a stable, optionally rigid device particularly for exposing over a significant surface a significant number of catalytic and/or co-catalytic sites all exposed to light from a single laser beam transmitted through and distributed by the waveguide. An area of this a significant surface may be for example between 30 µm² and 1000 µm², or preferably 50 µm² and 500 µm². The significant number of catalytic and/or co-catalytic sites may be between 30 and 1000, for example 100 and 300. Preferably a thickness (observed in a microscopic image of the waveguide) of the waveguide is between 30 nm and 360 nm, more preferably between 40 nm and 300 nm, most preferably between 50 nm and 200 nm. The thickness is also preferably adapted to or is in the order of the light irradiating the waveguide in a device according to the invention.

According to further preference the catalyst may be structured as a fiber with a fibrous waveguide material on a skin surface on which the catalytic sites are deposited.

As mentioned above light may be input into the waveguide at an end face or face side of the waveguide or via a particle on a main face of the wave guide, preferably and optical resonator, and which is arranged for optical coupling with the waveguide. The catalyst according to the invention may further comprise a non-absorbing optical resonator sites which are for example particles of silica or glass, arranged on the waveguide for an optical coupling and for transmitting the light into and/or out of the waveguide. In this manner light may particularly be input into the waveguide via a particle on a main face of the wave guide.

The catalyst of the invention may be one the catalytic activity and/or the selectivity of which is modulated by the light irradiated onto at least one of the waveguide and an optical resonator site among the optical resonator sites. The catalyst may be a catalyst selected from the group consisting of oxidation catalysts for a catalytic converter for exhaust gas of an internal combustion engine, reduction catalysts for a catalytic converter for exhaust gas of an internal combustion engine, catalysts for an anode reaction in a fuel cell, catalysts for an cathode reaction in a fuel cell, and catalysts for a conversion of carbon dioxide with hydrogen.

A device of the invention comprises the invention's catalyst, a fluid path for contacting the photocatalytic sites or set of the catalytic and co-catalytic sites with at least one fluid, and a light source arranged to apply a light beam onto at least one of the waveguide and an optical resonator site among the optical resonator sites. The light source may be a light source for light with a lower wavelength than visible light, e.g. light at a wavelength 30 nm and 360 nm, more preferably between 40 nm and 300 nm, most preferably between 50 nm and 200 nm. Corresponding energy from the light source is then efficiently transferred to the photocatalytic sites.

As described the invention allows of exciting one or more photocatalytic sites, like e.g. semiconductor photo-catalyst nanoparticles (e.g. of TiO₂, BiVO₄, WO₃, Si, ...) via light that is confined at the interface of a waveguide, in particular a high-index dielectric material, preferably as a water-resistant transparent dielectric waveguide, instead of exciting a photocatalyst in a fluid medium. Then optical coupling between the semiconductor photo-catalyst nanoparticles and the water-resistant transparent dielectric waveguide can be ensured, particularly when the nanoparticles are dispersed on a surface of the waveguide, which may be a surface of a coating of the waveguide, e.g. as thin as less than 20 nm for excellent stability and/or excellent optical coupling. In the waveguide, light propagates advantageously with minimal losses and can optically excite the photocatalyst nanoparticles resting on top of the waveguide through the light confined at the waveguide surface, also known as the near field.

According to an option dimensions of nanoparticles forming the photocatalytic sites have dimensions in the range of the wavelength of excitation to allow efficient excitation via optical resonances which can achieve wavelength-specific large light concentration (with an optical cross-section more than 10 times a geometrical cross-section of the waveguide). With this concept light that is resonantly concentrated in the catalyst nanoparticles and is absorbed by a photocatalytic sites and transformed into excited electrical charges that are used to drive and/or promote chemical and/or electrochemical reactions at the photocatalytic sites and thus at the catalyst surface.

According to an option the waveguide may be supported by a low refractive index support. A stable waveguide concentrating light irradiated to a face side of the waveguide and for distributing the light to the photocatalytic sites on the waveguide may be formed in this manner.

In a particular catalyst according to the invention the photocatalytic sites are TiO₂ nanoparticles for catalyzing an ORR in a fuel cell, preferably an ORR in water or an aqueous medium. In a preferable combination of a low refractive index support and a waveguide supported thereon a material of the low refractive index support is SiO₂ and a material of the waveguide is SiNx.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 is a schematic illustration of a catalyst according to the invention irradiated with excitation light;
- FIG. 2 is an image of a is fibrous catalyst according to the invention subjected to excitation light;
- Fig. 3 is a schematic illustration of a further catalyst according to the invention irradiated with excitation light;
- FIG. 4A is a schematic illustration of a test device with a waveguide on a frame and with deposited particles and light coupling between the waveguide and the particles;
- FIG. 4B is an image of a test device as schematically illustrated in Fig. 4A but without applied light for the coupling;
- FIG. 4C is an image of a test device as schematically illustrated in Fig. 4A with applied light for the coupling;
- FIG. 4D is a processed and grey scaled version of the image of Fig. 4C;
- FIG. 4E shows a light intensity measurement based on the image of Fig. 4D;
- Fig. 5A is a schematic illustration of a device according to the invention; and
- Fig. 5B is a fluorescence image obtained from the device shown in Fig. 5A.

### DETAILED DESCRIPTION OF EMBODIMENTS AND TESTS

### Catalyst

In the following schematic illustrations an open circle shaped arrow at or on a particle symbolizes a catalytic conversion, thick straight arrows or dotted arrows symbolize guided light.

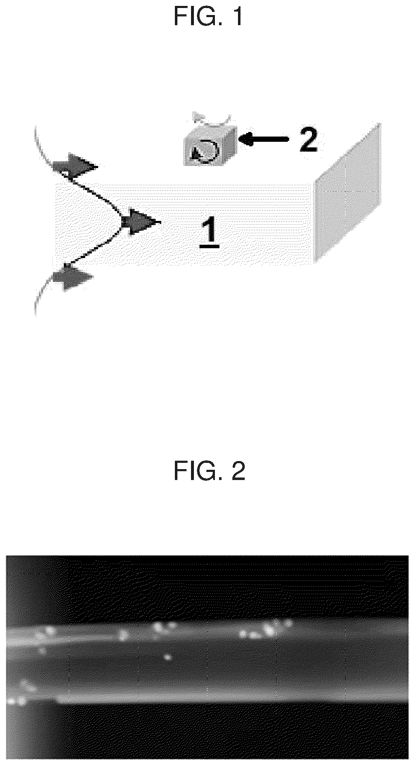

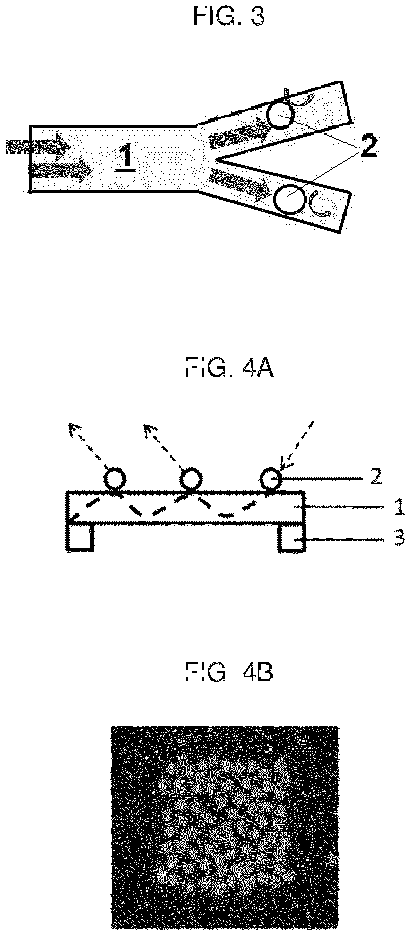

As shown in Fig. 1 basic elements of an exemplary catalyst of the invention are a waveguide 1 on which a photocatalytic site in the form of a particle 1 is arranged. The wave guide has a function (schematically illustrated with a curve left of the arrows symbolizing guided light in Fig. 1) of concentrating light applied to the wave guide. Fig. 2 shows photocatalytic TiO₂ nanoparticles as light spots on a waveguide fiber from which they receive light. According to a variant of the of a catalyst of the invention and as illustrated in Fig. 3 the waveguide has a branched structure and each branch of this structure has a different type of catalytic site deposited thereon like different nanoparticles 2 and the waveguide is designed to split guided light into its wavelengths so that each of the branches and its photocatalytic site deposited thereon receives a branch-specific light with a branch-specific wavelength.

Components of the catalyst according to the invention are the waveguide 1 and the photocatalytic site or sites and optionally co-catalytic sites. Functions in the catalyst according to the invention are optical coupling and light guiding.

A preferable example of a photocatalytic site is a semiconductor nanoparticle. Such sites are known on the basis of Si, TiO₂, BiVO₄, or WO₃. The particles may have single or multiple resonances at different wavelengths. As co-catalytic sites additional metal nanoparticles may be deposited next to or together with the photocatalytic sites to enhance the catalytic activity by promoting charge transfer from the semiconductor to the reactants.

As indicated above a waveguide is e.g. a thin film, slab or free-standing fiber based on a high-index dielectric material (e.g. of SiNx, SiOx, or Al₂O₃), preferably with a thickness in the order of the wavelength of UV-visible light inside the material. The waveguides may be single or multi-mode waveguides (i.e. sustain waveguiding of one or more wavelengths, respectively). The branched structure shown in Fig. 3 involves a multi-mode waveguide.

Optical coupling is achieved by proximity between the photocatalytic sites and waveguide. The optically-coupled photocatalyst and waveguide must function in the reaction environment for a reaction to be catalyzed by the photocatalytic sites.

For light guiding, light is steered by the geometrical constraints of the waveguide. Waveguides in the form of slabs and fibers may be branched into multiple subsequent waveguides of similar geometry for dividing light among them, or waveguides of different geometry to divide light of different colors may be used. Each color/wavelength can be used to selectively promote different reactions in either a sequential or simultaneous manner depending of a control of one or more of light sources a device according to the invention. The example shown in Figure 3 uses an 1D slab branching into two outputs. The slab can extend from micro meters to millimeters in length.

### Materials and equipment

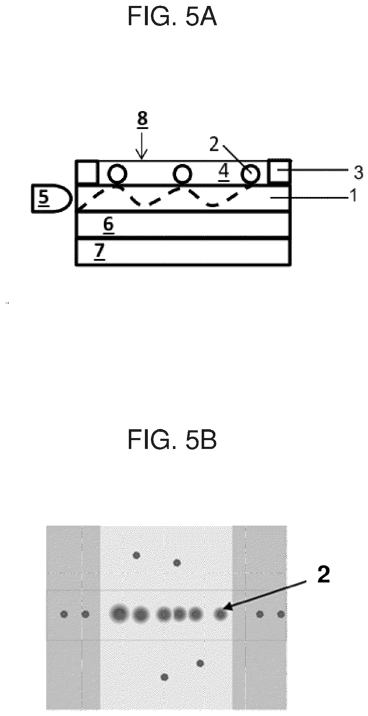

For materials or equipment to operate, examine and/or constitute devices examples and specific options used with devices discussed hereafter in relation to Figs. 4A to 4E, 5A and 5B are as follows.

| **material /equipment** | **examples** | **used for devices and results shown in** Figs. 4A-E, 5A-B |
|---|---|---|
| broad-band light in-coupler | spherical particles of SiO₂, Al₂O₃ or SiNₓ of 0.5 - 5 µm diameter, or Al₂O₃, SiNₓ or polymer resist grating | spherical particles of SiO₂ of 5 µm diameter |
| photocatalyst | metal oxide nanoparticles (e.g. TiO2, BiVO₄, SrTiO₃, WO₃) of 50-200 nm diameter | TiO₂ nanoparticles of 100 nm diameter |
| waveguide | 50-100 nm thick Si₃N₄ membrane or channel of 50 nm - 5 µm in width | 50 nm thick Si₃N₄ membrane |
| optical isolator | low refractive index SiO₂ layer (>1 µm thickness) in the case of waveguide channel | low refractive index SiO₂ film larger than 1 µm in thickness |
| substrate | Si, glass or any other solid substrate | glass |
| mechanical stabilser | frame of Si, glass or solid resist, in the case of a suspended membrane | frame of Si |
| fluid channel delimiter | rubber o-ring or PDMS (polydimethylsiloxane) frame | PDMS frame |
| fluid channel lid | transparent microscope slide | transparent microscope slide |
| light source | for 405 nm, 514 nm, 550 nm, 620 nm | for 405 nm or 550 nm, respectively |
| fluorescence microscope | inverted or up-right microscope with high aperture objective, CCD and filter sets | inverted microscope with high aperture objective, CCD and filter sets |
| softwa re | for obtaining spatially-resolved fluorescence images | for obtaining spatially-resolved fluorescence grey scale images |
| solution (reactant mix) | water, O₂ and charge scavenger | O₂ sensitive dye in water |
| probe | water-soluble O₂-sensitive dye molecules | water-soluble O₂-sensitive dye molecules |

### Test device

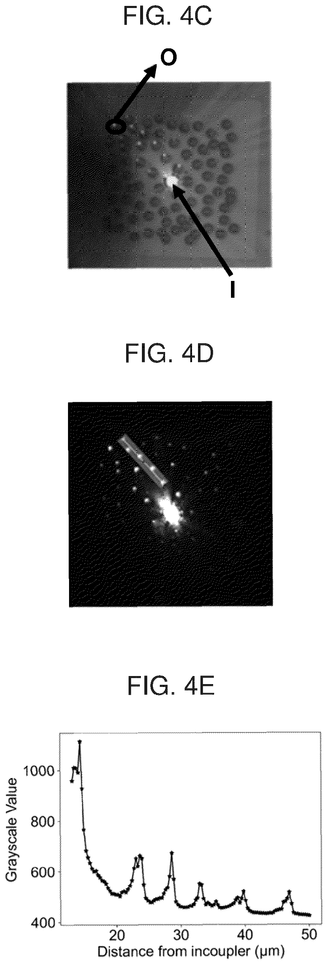

Fig. 4A illustrates spherical particles 2 of SiO₂ of 5 µm diameter on a 50 nm thick Si₃N₄ membrane (an exemplary SiNx material) which is placed on a frame 3 of Si. Fig. 4A illustrates a test device schematically without dimensions being scaled. With the test device shown in Fig. 4A to 4C optical coupling between the spherical particles 2 as non-absorbing optical resonators (i.e. the SiO₂ spheres of 5 µm in diameter) and the 50 nm-thick Si₃N₄ as a 2D waveguide in air was established. For this purpose, colloidally-grown SiO₂ spheres with broad-band resonances in the visible spectral range were drop-casted onto the 50 nm-thick Si₃N₄ membrane to adhere the spheres to the membrane via van der Waals forces. The microscope image in Figure 4B shows the random distribution of the SiO2 spheres on the membrane. A 550 nm laser light was focused on a central resonator I as a light in-coupler, i.e. to introduce light into the waveguide 1 through the principles of reciprocity. As shown in Fig. 4C resonators O in the top-left diagonal away from the in-coupling sphere I show intense scattered light, which indicates the excitation by light that is guided through the waveguide. The heterogeneous particle excitation is a result of the light in-coupling having a strong directionality depending on where the laser impinges on the in-coupling sphere I.

Fig. 4D and 4E show a quantitative analysis of the out-coupled light by each sphere on the bar shape diagonal portion visible in Fig. 4D as a function of its distance d from the in-coupling sphere I. An intensity profile of gray scale values along the bar shape diagonal portion visible in Fig. 4D is shown in Fig. 4E. The distance dependency of the scattered intensity (where d is the distance to the in-coupling sphere I) is in accordance to the power distribution in 2D waveguides.

### Device with catalyst

As shown in Fig. 5A, to test a fuel cell reaction, a fluid path 4 as a microfluidic channel crossing is formed in a frame 3 of Si between a transparent lid 8 and a waveguide 1, specifically over SiNx as a 1D waveguide 1 being a 50 nm thick Si3N4 membrane, decorated with 100 nm TiO₂ resonant nanoparticles 2, acting as photocatalytic sites activated by 405 nm light from a light source of which an end of a fiber 5 is illustrated in Fig. 5A. This light is travelling through the waveguide. The waveguide 1 is supported on a low refractive index SiO₂ film 6 which is formed in a glass substrate 7. Reactants (water, O2 and charge scavenger) are mixed with O2-sensitive dye molecules in the microfluidic channel/fluid path 4. A spatially-resolved fluorescence images captured by an inverted fluorescence microscope as a view onto the lid 8 is shown in Fig. 5B. The fluorescence intensity at a particle 2 is a direct measure of the O2 concentration in solution.

### Advantages and exemplary fields of use

According to a particular aspect the invention provides a way to introduce light excitation in catalytic converters and fuel cells to steer reactions that are relevant e.g. in the automotive field. By optical excitation, the degree of control over these chemical reactions can be increased and/or the reaction rate and/or selectivity can be enhanced. The invention provides a new way to steer light towards photocatalytic sites, e.g. in catalytic converters and fuel cells, with suppressed loss of light and into photocatalytic sites or catalyst portions that are optically inaccessible in conventional catalysts.

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

## Claims

1. A catalyst, comprising
photocatalytic sites responsive to light at at least one excitation wavelength, and
a waveguide for the light at the at least one excitation wavelength,
wherein the photocatalytic sites are arranged for an optical coupling and for receiving the light from the waveguide (1).

2. The catalyst according to claim 1, wherein the photocatalytic sites comprise a semiconductor material for absorbing the light at the at least one excitation wavelength.

3. The catalyst according to claim 2, wherein the semiconductor material is at least one selected from the group consisting of TiO2, BiVO₄, WO3, and Si.

4. The catalyst according to any of claims 1 to 3, wherein the photocatalytic sites are particles (2) with an average particle diameter between 50 nm and 200 nm.

5. The catalyst according to any of claims 1 to 4, further comprising a set of catalytic and co-catalytic sites which includes the photocatalytic sites.

6. The catalyst according to claim 5, wherein the co-catalytic sites are metal particles with an average particle diameter between 10 and 30 nm.

7. The catalyst according to any of claims 1 to 6, wherein the waveguide (1) comprises a transparent dielectric material.

8. The catalyst according to any of claims 1 to 7, wherein the waveguide (1) comprises a coating.

9. The catalyst according to any of claims 1 to 8, wherein the waveguide (1) is in the form of a membrane, a film, a strand, a branched structure or a block.

10. The catalyst according to claims 9, wherein a thickness of the waveguide (1) is between 30 nm and 360 nm.

11. The catalyst according to any of claims 1 to 10, further comprising a non-absorbing optical resonator sites arranged on the waveguide (1) for an optical coupling and for transmitting the light into and/or out of the waveguide (1).

12. The catalyst according to any of claims 1 to 11, the catalytic activity and/or the selectivity of which is modulated by the light irradiated onto at least one of the waveguide (1) and an optical resonator site among the optical resonator sites, and which is a catalyst selected from the group consisting of oxidation catalysts for a catalytic converter for exhaust gas of an internal combustion engine, reduction catalysts for a catalytic converter for exhaust gas of an internal combustion engine, catalysts for an anode reaction in a fuel cell, catalysts for an cathode reaction in a fuel cell, and catalysts for a conversion of carbon dioxide with hydrogen.

13. A device, comprising
- the catalyst according to any of claims 1 to 12,
- a fluid path (4) for contacting the photocatalytic sites or set of the catalytic and co-catalytic sites with at least one fluid, and
- a light source (5) arranged to apply a light beam onto at least one of the waveguide (1) and an optical resonator site among the optical resonator sites.

## Amended claims

### Amended claims in accordance with Rule 137(2) EPC.

**1.** A catalyst selected from the group consisting of oxidation catalysts for a catalytic converter for exhaust gas of an internal combustion engine, reduction catalysts for a catalytic converter for exhaust gas of an internal combustion engine, catalysts for an anode reaction in a fuel cell, catalysts for a cathode reaction in a fuel cell, and catalysts for a conversion of carbon dioxide with hydrogen, the catalyst comprising
photocatalytic sites responsive to light at at least one excitation wavelength, and a waveguide (1) for the light at the at least one excitation wavelength,
wherein the photocatalytic sites are arranged for an optical coupling and for receiving the light from the waveguide (1) and the catalytic activity and/or the selectivity of the catalyst is modulated by the light irradiated onto the waveguide (1) or onto particles being non-absorbing optical resonator sites (2a) of the catalyst which are arranged on the waveguide (1) for an optical coupling as well as for transmitting the light into and/or out of the waveguide (1).

**2.** The catalyst according to claim 1, wherein the photocatalytic sites comprise a semiconductor material for absorbing the light at the at least one excitation wavelength.

**3.** The catalyst according to claim 2, wherein the semiconductor material is at least one selected from the group consisting of TiO2, BiVO4, WO3, and Si.

**4.** The catalyst according to any of claims 1 to 3, wherein the photocatalytic sites are particles (2) with an average particle diameter between 50 nm and 200 nm.

**5.** The catalyst according to any of claims 1 to 4, further comprising a set of catalytic and co-catalytic sites which includes the photocatalytic sites.

**6.** The catalyst according to claim 5, wherein the co-catalytic sites are metal particles with an average particle diameter between 10 nm and 30 nm.

**7.** The catalyst according to any of claims 1 to 6, wherein the waveguide (1) comprises a transparent dielectric material.

**8.** The catalyst according to any of claims 1 to 7, wherein the waveguide (1) comprises a coating.

**9.** The catalyst according to any of claims 1 to 8, wherein the waveguide (1) is in the form of a membrane, a film, a strand, a branched structure or a block.

**10.** The catalyst according to claims 9, wherein a thickness of the waveguide (1) is between 30 nm and 360 nm.

**11.** A device, comprising
- the catalyst according to any of claims 1 to 10,
- a fluid path (4) for contacting the photocatalytic sites or set of the catalytic and co-catalytic sites with at least one fluid, and
- a light source (5) arranged to apply a light beam onto at least one of the waveguide (1) and an optical resonator site among the optical resonator sites.

**1.** A catalyst selected from the group consisting of oxidation catalysts for a catalytic converter for exhaust gas of an internal combustion engine, reduction catalysts for a catalytic converter for exhaust gas of an internal combustion engine, catalysts for an anode reaction in a fuel cell, catalysts for a cathode reaction in a fuel cell, and catalysts for a conversion of carbon dioxide with hydrogen, the catalyst comprising
a set of catalytic and co-catalytic sites being metal particles with an average particle diameter between 10 nm and 30 nm, which set includes photocatalytic sites responsive to light at at least one excitation wavelength, and
a waveguide (1) for the light at the at least one excitation wavelength,
wherein the photocatalytic sites are particles (2) with an average particle diameter between 50 nm and 200 nm dispersed on a surface of the waveguide and arranged for an optical coupling and for receiving the light from the waveguide (1) and the catalytic activity and/or the selectivity of the catalyst is modulated by the light irradiated onto the waveguide (1) or onto particles being non-absorbing optical resonator sites (2a) of the catalyst which are arranged on the waveguide (1) for an optical coupling as well as for transmitting the light into and/or out of the waveguide (1).

**2.** The catalyst according to claim 1, wherein the photocatalytic sites comprise a semiconductor material for absorbing the light at the at least one excitation wavelength.

**3.** The catalyst according to claim 2, wherein the semiconductor material is at least one selected from the group consisting of TiO2, BiVO4, WO3, and Si.

**4.** The catalyst according to any of claims 1 to 3, wherein the waveguide (1) comprises a transparent dielectric material.

**5.** The catalyst according to any of claims 1 to 4, wherein the waveguide (1) comprises a coating.

**6.** The catalyst according to any of claims 1 to 5, wherein the waveguide (1) is in the form of a membrane, a film, a strand, a branched structure or a block.

**7.** The catalyst according to claims 6, wherein a thickness of the waveguide (1) is between 30 nm and 360 nm.

**8.** A device, comprising
- the catalyst according to any of claims 1 to 7,
- a fluid path (4) for contacting the photocatalytic sites or set of the catalytic and co-catalytic sites with at least one fluid, and
- a light source (5) arranged to apply a light beam onto at least one of the waveguide (1) and an optical resonator site among the optical resonator sites.
